(19) Europäisches Patentamt / European Patent Office / Office européen des brevets

(11) EP 2 255 632 A1

(12) EUROPÄISCHE PATENTANMELDUNG

(43) Veröffentlichungstag:
**01.12.2010 Patentblatt 2010/48**

(51) Int Cl.:
***A01N 43/78** (2006.01)* ***A01P 3/00** (2006.01)*
***A01N 37/50** (2006.01)* ***A01N 47/24** (2006.01)*

(21) Anmeldenummer: **10171023.4**

(22) Anmeldetag: **23.11.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**HR MK YU**

(30) Priorität: **03.12.2004 DE 102004058585**
**25.11.2004 DE 102004057070**

(62) Dokumentnummer(n) der früheren Anmeldung(en) nach Art. 76 EPÜ:
**05811186.5 / 1 816 914**

(27) Früher eingereichte Anmeldung:
**23.11.2005 EP 05811186**

(71) Anmelder: **BASF SE**
**67056 Ludwigshafen (DE)**

(72) Erfinder:
- **Tormo i Blasco, Jordi**
  **69469 Weinheim (DE)**
- **Scherer, Maria**
  **76829 Landau (DE)**
- **Stierl, Reinhard**
  **83345 Kaohsiung County (TW)**
- **Strathmann, Siegfried**
  **67117 Limburgerhof (DE)**
- **Niedenbrück, Matthias**
  **67117 Limburgerhof (DE)**
- **Brix, Horst, Dieter**
  **76829 Landau (DE)**
- **Gewehr, Markus**
  **56288 Kastellaun (DE)**
- **Habicher, Christine**
  **67346 Speyer (DE)**

Bemerkungen:
Diese Anmeldung ist am 28-07-2010 als Teilanmeldung zu der unter INID-Code 62 erwähnten Anmeldung eingereicht worden.

(54) **Verfahren zur Verstärkung der Wirksamkeit von Ethaboxam**

(57) Verfahren zur Verstärkung der fungiziden Wirksamkeit von Ethaboxam der Formel 1,

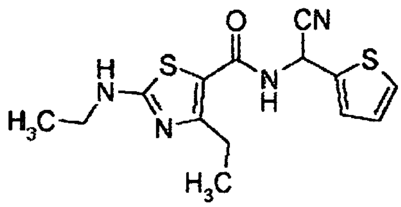

I

**dadurch gekennzeichnet, dass** der Wirkstoff I gleichzeitig getrennt oder gemeinsam mit mindestens einem Wirkstoff II aus der Gruppe:
Kresoxim-Methyl oder Pyraclostrobin
in synergistisch wirksamen Mengen, durch Besprühen oder Bestäuben der Samen, der Pflanzen oder der Böden vor oder nach der Aussaat der Pflanzen oder vor oder nach dem Auflaufen der Pflanzen appliziert wird, wobei keine Polyoxyalkylenalkylether als Adjuvants zur Anwendung kommen, neue synergistische Mischungen von Ethaboxam sowie Mittel, die diese Mischungen enthalten und die Verwendung von Ethaboxam zur Herstellung derartiger Mischungen.

EP 2 255 632 A1

## Beschreibung

Die vorliegende Erfindung betrifft ein Verfahren zur Verstärkung der fungiziden Wirksamkeit von

a) Ethaboxam der Formel I,

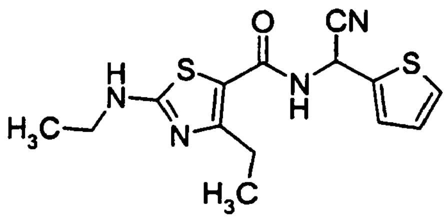

I

**dadurch gekennzeichnet, dass** der Wirkstoff I gleichzeitig getrennt oder gemeinsam mit mindestens einem Wirkstoff II aus der Gruppe:

b) Dithiocarbamate wie Maneb, Mancozeb, Metam oder Metiram,
Sulfensäurederivate wie Captan oder Folpet,
Strobilurinderivate wie Kresoxim-Methyl oder Pyraclostrobin, Zimtsäureamide und Analoge wie Dimethomorph oder Flumorph, oder Dithianon, Famoxadone, Cymoxanil, Fluazinam, Zoxamide, Mefenoxam oder Chlorothalonil, N-(2-{4-[3-(4-Chlor-phenyl)-prop-2-inyloxy]-3-methoxy-phenyl}-ethyl)-2-methansulfonylamino-3-methyl-butyramid, N-(2-{4-[3-(4-Chlor-phenyl)-prop-2-inyloxy]-3-methoxy-phenyl}-ethyl)-2-ethansulfonylamino-3-methyl-butyramid oder 5-Chlor-7-(4-methyl-piperidin-1-yl)-6-(2,4,6-trifluorphenyl)-[1,2,4]triazolo[1,5-a]pyrimidin

in synergistisch wirksamen Mengen, durch Besprühen oder Bestäuben der Samen, der Pflanzen oder der Böden vor oder nach der Aussaat der Pflanzen oder vor oder nach dem Auflaufen der Pflanzen appliziert wird, wobei keine Polyoxyalkylenalkylether als Adjuvants zur Anwendung kommen.

Außerdem betrifft die Erfindung neue synergistische Mischungen von Ethaboxam mit Wirkstoffen aus der Gruppe b1) sowie Mittel, die diese Mischungen enthalten und die Verwendung der Verbindung I mit Wirkstoffen aus der Gruppe b1) zur Herstellung derartiger Mischungen.

Das als Komponente a) voranstehend bezeichnete Ethaboxam der Formel I, N-(Cyano-2-thienylmethyl)-4-ethyl-2-(ethylamino)-5-thiazolecarboxamid, dessen Herstellung und dessen Wirkung gegen Schadpilze ist aus der Literatur bekannt (EP-A 639 574).

Die voranstehend als Komponente b) genannten Wirkstoffe, ihre Herstellung und ihre Wirkung gegen Schadpilze sind ebenfalls allgemein bekannt (vgl. auch:

http://www.hclrss.demon.co.uk/index.html):

Mancozeb, Mangan-ethylenbis(dithiocarbamat) Zinkkomplex (US 3 379 610);
Maneb, Mangan-ethylenbis(dithiocarbamat) (US 2 504 404);
Metam, Methyldithiocarbaminsäure (US 2 791 605);
Metiram, Zinkammoniat-ethylenbis(dithiocarbamat) (US 3 248 400);
Kresoxim-methyl, (*E*)-Methoxyimino[*a*-(*o*-tolyloxy)-*o*-tolyl]essigsäuremethylester (EP-A 253 213);
Pyraclostrobin, *N*-{2-[1-(4-Chlorphenyl)-1*H*-pyrazol-3-yloxymethyl]phenyl}(*N*-methoxy)carbaminsäuremethylester (WO-A 96/01256);
Mefenoxam, Methyl-N-(methoxyacetyl)-N-(2,6-xylyl)-D-alaninat (WO 96/01559);
Dimethomorph, 3-(4-Chlorphenyl)-3-(3,4-dimethoxyphenyl)-1-morpholin-4-yl-propenon (EP-A 120 321);
Flumorph, 3-(4-Fluorphenyl)-3-(3,4-dimethoxyphenyl)-1-morpholin-4-yl-propenon (EP-A 860 438);
Dithianon, 5,10-Dioxo-5,10-dihydro-naphtho[2,3-b][1,4]dithiin-2,3-dicarbonitril (GB 857 383);
Famoxadone, (*RS*)-3-Anilino-5-methyl-5-(4-phenoxyphenyl)-1,3-oxazolidin-2,4-dion ;
Fenamidon, (*S*)-1-Anilino-4-methyl-2-methylthio-4-phenylimidazolin-5-on ; Chlorothalonil, 2,4,5,6-Tetrachlor-isophthalonitril (US 3 290 353);
Fluazinam, 3-Chlor-N-[3-chlor-2,6-dinitro-4-(trifluoromethyl)phenyl]-5-(trifluormethyl)-2-pyridin-amin (The Pecticide Manual, Hrsg. The British Crop Protection Council, 10. Aufl. (1995), S. 474);
Zoxamid, (*RS*)-3,5-Dichlor-*N*-(3-chlor-1-ethyl-1-methyl-2-oxopropyl)-*p*-toluamid (CAS-No. 156052-68-5);
N-(2-{4-[3-(4-Chlor-phenyl)-prop-2-ynyloxy]-3-methoxy-phenyl}-ethyl)-2-methan/ethansulfonylamino-3-methyl-butyramid (WO 99/07674); und 5-Chlor-7-(4-methyl-piperidin-1-yl)-6-(2,4,6-trifluorphenyl)-[1,2,4]triazolo[1,5-a]pyrimidin (WO 98/46607).

Aus WO 01/84930 sind Polyoxyalkylenalkylether enthaltende Formulierungen von Ethaboxam bekannt, die neben Ethaboxam einen weiteren Wirkstoff aus der Gruppe b) enthalten können. Durch die Verwendung der beschriebenen Polyoxyalkylenalkylether wird die fungizide Wirksamkeit von Ethaboxam erhöht.

Mischungen von Ethaboxam mit einem der folgenden Wirkstoffe II aus der Gruppe: b1) Maneb, Metam, Metiram, Captan,

Strobilurinderivaten wie Kresoxim-Methyl oder Pyraclostrobin, Flumorph, Zoxamide, N-(2-{4-[3-(4-Chlor-phenyl)-prop-2-inyloxy]-3-methoxyphenyl}-ethyl)-2-methansulfonylamino-3-methyl-butyramid, N-(2-{4-[3-(4-Chlorphenyl)-prop-2-inyloxy]-3-methoxy-phenyl}-ethyl)-2-ethansulfonylamino-3-methyl-butyramid oder 5-Chlor-7-(4-methyl-piperidin-1-yl)-6-(2,4,6-trifluorphenyl)-[1,2,4]triazolo[1,5-a]pyrimidin (Formel II-1)

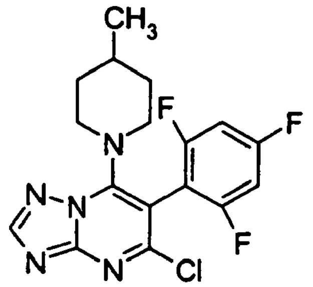

II-1

sind neu.

Im Hinblick auf die Minimierung der Aufwandmengen von Pestiziden lag der vorliegenden Erfindung die Aufgabe zugrunde, die fungizide Wirksamkeit von Ethaboxam, unabhängig von der Verwendung bestimmter Formulierungshilfsmittel, zu erhöhen.

Demgemäss wurden das eingangs definierte Verfahren und die neuen Mischungen gefunden. Es wurde außerdem gefunden, dass sich bei gleichzeitiger gemeinsamer oder getrennter Anwendung von Ethaboxam und mindestens eines Wirkstoffs aus der Gruppe b) oder bei Anwendung von Ethaboxam und mindestens eines Wirkstoffs aus der Gruppe b) nacheinander pflanzenpathogene Schadpilze besser bekämpfen lassen als mit den Einzelverbindungen (synergistische Mischungen). Durch gleichzeitige gemeinsame oder getrennte Anwendung von Ethaboxam mit mindestens einem Wirkstoff aus der Gruppe b) wird die fungizide Wirksamkeit in überadditivem Maße erhöht.

Die Mischungen von Ethaboxam und mindestens eines Wirkstoffs aus der Gruppe b), bzw. die gleichzeitige gemeinsame oder getrennte Verwendung von Ethaboxam und mindestens eines Wirkstoffs aus der Gruppe b) zeichnen sich aus durch eine hervorragende Wirksamkeit gegen ein breites Spektrum von pflanzenpathogenen Pilzen, insbesondere aus der Klasse der *Ascomyceten, Deuteromyceten*, *Oomyceten* und *Basidiomyceten.* Sie können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisgewächse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Vorteilhaft eignen sie sich zur Bekämpfung der folgenden pflanzenpathogenen Pilze: *Blumeria graminis* (echter Mehltau) an Getreide, *Erysiphe cichoracearum* und *Sphaerotheca fuliginea* an Kürbisgewächsen, *Podosphaera leucotricha* an Äpfeln, *Uncinula necatoran* Reben, *Puccinia*-Arten an Getreide, *Rhizoctonia*-Arten an Baumwolle, Reis und Rasen, Ustilago-Arten an Getreide und Zuckerrohr, *Venturia inaequalis* an Äpfeln, *Bipolaris*- und *Drechslera*-Arten an Getreide, Reis und Rasen, *Septoria*-Arten an Weizen, *Botrytis cinerea* an Erdbeeren, Gemüse, Zierpflanzen und Reben, *Mycosphaerella*-Arten an Bananen, Erdnüssen und Getreide, *Pseudocercosporella herpotrichoides* an Weizen und Gerste, *Pyricularia oryzae* an Reis, Phakopsora-Arten an Soja, *Phytophthora infestans* an Kartoffeln und Tomaten, *Pseudoperonospora*-Arten an Kürbisgewächsen und Hopfen, *Plasmopara viticola* an Reben, *Altemaria*-Arten an Gemüse und Obst sowie *Fusarium*- und *Verticillium*-Arten.

Insbesondere sind sie zur Bekämpfung von Schadpilzen aus der Klasse der *Oomyceten* geeignet.

Die Kombinationen von Ethaboxam und mindestens einem Wirkstoff der Gruppe b) eignen sich außerdem zur Bekämpfung von Schadpilzen wie *Paecilomyces variotii* im Materialschutz (z.B. Holz, Papier, Dispersionen für den Anstrich, Fasern bzw. Gewebe) und im Vorratsschutz.

Ethaboxam und Wirkstoffe aus der Gruppe b) können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Bevorzugt in dem erfindungsgemäßen Verfahren sind die Kombinationen von Ethaboxam mit einer der Verbindungen Dithianon und Dimethomorph.

Eine besonders bevorzugte Ausführung der erfindungsgemäßen Mischungen betrifft die Kombination von Ethaboxam und Strobilurinen wie Kresoxim-Methyl oder, insbesondere, Pyraclostrobin.

Eine weitere bevorzugte Ausführung der erfindungsgemäßen Mischungen betrifft die Kombination von Ethaboxam und 5-Chlor-7-(4-methyl-piperidin-1-yl)-6-(2,4,6-trifluorphenyl)-[1,2,4]triazolo[1,5-a]pyrimidin (Formel II-1).

Eine weitere bevorzugte Ausführung der erfindungsgemäßen Mischungen betrifft die Kombination von Ethaboxam und Zoxamide.

Bevorzugt setzt man bei der Bereitstellung der Mischungen die reinen Wirkstoffe I und II ein, denen man je nach Bedarf weitere Wirkstoffe III gegen Schadpilze oder andere Schädlinge wie Insekten, Spinntiere oder Nematoden, oder auch herbizide oder wachstumsregulierende Wirkstoffe oder Düngemittel als weitere Aktivkomponenten beimischen kann.

Als weitere Wirkstoffe III im voranstehenden Sinne kommen insbesondere Fungizide ausgewählt aus der folgenden Gruppe c) in Frage:

- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph,
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tebuconazol, Tetraconazol, Triadimefon, Triadimenol, Triflumizol, Triticonazol,
- Dicarboximide wie Iprodion, Myclozolin, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Picobenzamid, Probenazol, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl,
- Phenylpyrrole wie Fenpiclonil oder Fludioxonil,
- Schwefel,
- Sonstige Fungizide wie Acibenzolar-S-methyl, Benthiavalicarb, Carpropamid, Chlorothalonil, Cyflufenamid, Cymoxanil, Diclomezin, Diclocymet, Diethofencarb, Edifenphos, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phosphorige Säure, Phthalid, Toloclofos-methyl, Quintozene, Zoxamid,
- Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin,
- Sulfensäurederivate wie Captafol, Captan, Dichlofluanid, Folpet, Tolylfluanid,
- Zimtsäureamide und Analoge wie Dimethomorph, Flumetover oder Flumorph.

Üblicherweise kommen Mischungen von Ethaboxam mit einem Wirkstoff II aus der Gruppe b) zur Anwendung. Eine besonders starke fungizide Wirkung weisen Mischungen von Ethaboxam mit zwei Wirkstoffen II und III auf. Als Wirkstoffe II eignen sich bevorzugt die in Gruppe b) genannten, als weitere Wirkstoffe III kommen neben den Wirkstoffen der Gruppe b) insbesondere phosphorige Säure $H_3PO_3$, ihre Alkali- oder Erdalkalisalze oder sie freisetzende Derivate, bevorzugt Ethylphosphonat (common name: Fosethyl) und Ethylphosphonat Aluminium (common name: Fosethyl-Al), oder Kupferfungizide wie Bordeaux Brühe, Kupferacetat, Kupferoxychlorid oder basisches Kupfersulfat in Frage.

Eine besonders bevorzugte Ausführung der erfindungsgemäßen Mischungen betrifft die Kombination von Ethaboxam und Fluazinam mit einem weiteren Wirkstoff III.

Eine weitere besonders bevorzugte Ausführung der erfindungsgemäßen Mischungen betrifft die Kombination von Ethaboxam und Pyraclostrobin mit einem weiteren Wirkstoff III.

Eine weitere besonders bevorzugte Ausführung der erfindungsgemäßen Mischungen betrifft die Kombination von Ethaboxam und Dithianon mit einem weiteren Wirkstoff III.

Eine weitere besonders bevorzugte Ausführung der erfindungsgemäßen Mischungen betrifft die Kombination von Ethaboxam und Dimethomorph mit einem weiteren Wirkstoff III.

Eine weitere besonders bevorzugte Ausführung der erfindungsgemäßen Mischungen betrifft die Kombination von Ethaboxam mit der Verbindung der Formel II-1 und einem Wirkstoff III aus der Gruppe c).

Ethaboxam und der Wirkstoff II werden üblicherweise in einem Gewichtsverhältnis von 100:1 bis 1:100, vorzugsweise 20:1 bis 1:50, insbesondere 10:1 bis 1:20 angewandt.

Die Kombination von Ethaboxam mit der Verbindung der Formel II-1 liegt bevorzugt in einem Gewichtsverhältnis von 20:1 bis 1:20, insbesondere 10:1 bis 1:10 vor.

Weitere Wirkstoffe III werden gewünschtenfalls bevorzugt im Verhältnis von 20:1 bis 1:20 zu Ethaboxam zugemischt. Phosphorige Säure und Kupferfungizide können auch vorteilhaft in deutlich höheren Mengen zugesetzt werden. In ternären Mischungen liegen die Wirkstoffe I:II:III bevorzugt in Verhältnissen von 100:1:2000 bis 100:1:5 bis 1: 100:0,05 bis 1:100:20 vor.

Die Aufwandmengen der erfindungsgemäßen Mischungen liegen je nach Art der Verbindung und des gewünschten Effekts bei 5 g/ha bis 2000 g/ha, vorzugsweise 50 bis 1750 g/ha, insbesondere 50 bis 1500 g/ha.

Die Aufwandmengen für Ethaboxam liegen entsprechend in der Regel bei 1 bis 750 g/ha, vorzugsweise 10 bis 500 g/ha, insbesondere 20 bis 250 g/ha.

Die Aufwandmengen für einen Wirkstoff II, je nach Art desselben, liegen entsprechend in der Regel bei 1 bis 2000 g/ha, vorzugsweise 10 bis 1500 g/ha, insbesondere 40 bis 1200 g/ha. Für die Verbindung der Formel II-1 liegen die Aufwandmengen üblicherweise bei 5 g/ha bis 1000 g/ha, vorzugsweise 50 bis 900 g/ha, insbesondere 40 bis 750 g/ha.

Bei der Saatgutbehandlung werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.

Das Verfahren zur Bekämpfung von Schadpilzen erfolgt durch die getrennte oder gemeinsame Applikation von Ethaboxam und mindestens eines Wirkstoffs aus der Gruppe b) oder der Mischungen von Ethaboxam und mindestens eines Wirkstoffs aus der Gruppe b) durch Besprühen oder Bestäuben der Samen, der Pflanzen oder der Böden vor oder nach der Aussaat der Pflanzen oder vor oder nach dem Auflaufen der Pflanzen, wobei im Falle der Wirkstoffe II, die nicht der Gruppe b1 angehören, keine Polyoxyalkylenalkylether als Adjuvants zur Anwendung kommen.

Die erfindungsgemäßen Mischungen, bzw. Ethaboxam und der Wirkstoff aus der Gruppe b1) können in die üblichen Formulierungen überführt werden, z.B. Lösungen, Emulsionen, Suspensionen, Stäube, Pulver, Pasten und Granulate. Für die erfindungsgemäßen Mischungen enthaltenden Formulierungen kommen auch Polyoxyalkylenalkylether als Adjuvants in Frage. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Formulierungen für die Saatgutbehandlung können zusätzlich Bindemittel und/oder Geliermittel und gegebenenfalls Farbstoffe enthalten.

Bindemittel können zugesetzt werden, um Haftung der Wirkstoffe auf dem Saatgut nach der Behandlung zu erhöhen. Geeignete Bindemittel sind beispielsweise EO/PO Blockcopolymer-Tenside, aber auch Polyvinylalcohole, Ppolyvinylpyrrolidone, Polyacrylate, Polymethacrylate, Polybutene, Polyisobutylene, Polystyrole, Polyethylenamine, Polyethylenamide, Polyethylenimine (Lupasol®, Polymin®), Polyether, Polyurethane, Polyvinylacetate, Tylose und Copolymere aus diesen Polymeren. Ein geeignetes Geliermittel ist beispielsweise Carrageen (Satiagel®).

Die Formulierungen enthalten im allgemeinen zwischen 0,01 und 95 Gew.-%, vorzugsweise zwischen 0,1 und 90 Gew.% der Wirkstoffe. Die Wirkstoffe werden dabei in einer Reinheit von 90% bis 100%, vorzugsweise 95% bis 100% (nach NMR-Spektrum) eingesetzt.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Für die Saatgutbehandlung ergeben die betreffenden Formulierungen nach zwei- bis zehnfacher Verdünnung Wirkstoffkonzentrationen von 0,01 bis 60 Gew.%, bevorzugt 0,1 bis 40 Gew.% in den fertig verwendbaren Zubereitungen.

Beispiele für Formulierungen sind: 1. Produkte zur Verdünnung in Wasser

A) Wasserlösliche Konzentrate (SL, LS)

10 Gew.-Teile der Wirkstoffe werden in 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit 10 Gew.-% Wirkstoffgehalt.

B) Dispergierbare Konzentrate (DC)

20 Gew.-Teile der Wirkstoffe werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%.

C) Emulgierbare Konzentrate (EC)

15 Gew.-Teile der Wirkstoffe werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat 15 Gew.-% Wirkstoffgehalt.

D) Emulsionen (EW, EO, ES)

25 Gew.-Teile der Wirkstoffe werden in 35 Gew.-Teilen Xylol unter Zusatz von Ca-Dodecylbenzolsulfonat und Ricinusölethoxylat (jeweils 5 Gew.-Teile) gelöst. Diese Mischung wird mittels einer Emulgiermaschine (Ultraturax) in 30 Gew.-Teile Wasser eingebracht und zu einer homogenen Emulsion gebracht. Bei der Verdünnung in Wasser ergibt sich eine Emulsion. Die Formulierung hat einen Wirkstoffgehalt von 25 Gew.-%.

E) Suspensionen (SC, OD, FS)

20 Gew.-Teile der Wirkstoffe werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-%.

F) Wasserdispergierbare und wasserlösliche Granulate (WG, SG)

50 Gew.-Teile der Wirkstoffe werden unter Zusatz von 50 Gew.-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.

G) Wasserdispergierbare und wasserlösliche Pulver (WP, SP, SS, WS)

75 Gew.-Teile der Wirkstoffe werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt beträgt 75 Gew.-%.

H) Gelformulierungen

In einer Kugelmühle werden 20 Gew.-Teile der Wirkstoffe, 10 Gew.-Teile Dispergiermittel, 1 Gew.-Teil Geliermittel und 70 Gew.-Teile Wasser oder eines organischen Lösungsmittels zu einer feinen Suspension vermahlen. Bei der Verdünnung mit Wasser ergibt sich eine stabile Suspension mit 20 Gew.-% Wirkstoffgehalt.

2. Produkte für die Direktapplikation

I) Stäube (DP, DS)

5 Gew.Teile der Wirkstoffe werden fein gemahlen und mit 95 % feinteiligem Kaolin innig vermischt. Man erhält dadurch ein Stäubmittel mit 5 Gew.-% Wirkstoffgehalt.

J) Granulate (GR, FG, GG, MG)

0.5 Gew-Teile der Wirkstoffe werden fein gemahlen und mit 99,5 % Trägerstoffe verbunden. Gängige Verfahren sind dabei die Extrusion, die Sprühtrocknung oder die Wirbelschicht. Man erhält dadurch ein Granulat für die Direktapplikation mit 0,5 Gew.-% Wirkstoffgehalt.

K) ULV- Lösungen (UL)

10 Gew.-Teile der Wirkstoffe werden in 90 Gew.-Teilen eines organischen Lösungsmittels z.B. Xylol gelöst. Dadurch erhält man ein Produkt für die Direktapplikation mit 10 Gew.% Wirkstoffgehalt.

Für die Saatgutbehandlung werden üblicherweise wasserlösliche Konzentrate (LS), Suspensionen (FS), Stäube (DS), wasserdispergierbare und wasserlösliche Pulver (WS, SS), Emulsionen (ES), emulgierbare Konzentrate (EC) und Gelformulierungen (GF) verwendet. Diese Formulierungen können auf das Saatgut unverdünnt oder, bevorzugt, verdünnt angewendet werden. Die Anwendung kann vor der Aussaat erfolgen.

Bevorzugt werden FS Formulierungen für die Saatgutbehandlung verwendet. Üblicherweise enthalten solche Formulierungen 1 bis 800 g/l Wirkstoff, 1 bis 200 g/l Tenside, 0 bis 200 g/l Frostschutzmittel, 0 bis 400 g/l Bindemittel, 0 bis 200 g/l Farbstoffe und Lösungsmittel, vorzugsweise Wasser.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:100 bis 100:1, bevorzugt 1:10 bis 10:1 zugemischt werden.

Als Adjuvants in diesem Sinne kommen insbesondere in Frage: organisch modifizierte Polysiloxane, z.B. Break Thru S 240®; Alkoholalkoxylate, z. B. Atplus 245®, Atplus MBA 1303®, Plurafac LF 300® und Lutensol ON 30®; EO-PO-Blockpolymerisate, z. B. Pluronic RPE 2035® und Genapol B®; Alkoholethoxylate, z. B. Lutensol XP 80®; und Natriumdioctylsulfosuccinat, z. B. Leophen RA®.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindung und der Mischungen ließ sich durch folgende Versuche zeigen:

Die Wirkstoffe wurden getrennt oder gemeinsam als eine Stammlösung aufbereitet mit 25 mg Wirkstoff, welcher mit einem Gemisch aus Aceton und/oder DMSO und dem Emulgator Uniperol® EL (Netzmittel mit Emulgier und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt.

Die Wirkstoffe Pyraclostrobin, Famoxadon, Fluazinam und Zoxamid wurden als handelsübliche Formulierungen verwendet.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

I. Gewächshausversuche

Anwendungsbeispiel 1 - Wirksamkeit gegen Rebenperonospora verursacht durch *Plasmopara viticola* bei 7 Tage protektiver Anwendung

Blätter von Topfreben wurden mit wäßriger Suspension in der unten angegebenen Wirkstoffkonzentration bis zur Tropfnässe besprüht. Um die Dauerwirkung der Substanzen beurteilen zu können, wurden die Pflanzen nach dem Antrocknen des Spritzbelages für 7 Tage im Gewächshaus aufgestellt. Erst dann wurden die Blätter mit einer wäßrigen Zoosporenaufschwemmung von *Plasmopara viticola* inokuliert. Danach wurden die Reben zunächst für 48 Stunden in

einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

| Nr. | Wirkstoff | Konz. [ppm] | Verhältnis | Beobachtete Wirkung (%) | Berechnete Wirkung nach Colby (%) |
|---|---|---|---|---|---|
| 1 | - (Kontrolle) | - | | 0 (90% Befall) | |
| 2 | Ethaboxam<br>I | 16<br>4<br>1 | | 44<br>22<br>0 | |
| 3 | II-1 | 4<br>0,25 | | 22<br>0 | |
| 4 | Dimethomorph<br>II-2 | 4 | | 0 | |
| 5 | Cymoxanil<br>II-3 | 4 | | 0 | |
| 6 | Fluazinam<br>II-4 | 63 | | 22 | |
| 7 | I + II-1 | 1 + 0,25 | 4:1 | 44 | 0 |
| 8 | I + I I-1 | 1 + 4 | 1:4 | 56 | 0 |
| 9 | I + II-2 | 16 + 4 | 4:1 | 94 | 44 |
| 10 | I + I I-2 | 4 + 4 | 1:1 | 78 | 22 |
| 11 | I + II-3 | 16 + 4 | 4:1 | 99 | 44 |
| 12 | I + II-4 | 16 + 63 | 1:4 | 67 | 57 |

Anwendungsbeispiel 2 - Wirksamkeit gegen Rebenperonospora verursacht durch *Plasmopara viticola* bei protektiver Anwendung

Blätter von Topfreben wurden mit wäßriger Suspension in der unten angegebenen Wirkstoffkonzentration bis zur Tropfnässe besprüht. Die Pflanzen wurden zum Antrocknen des Spritzbelages für 3 Tage im Gewächshaus aufgestellt. Dann wurden die Blätter mit einer wäßrigen Zoosporenaufschwemmung von *Plasmopara viticola* inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

| Nr. | Wirkstoff | Konz. [ppm] | Verhältnis | Beobachtete Wirkung (%) | Berechnete Wirkung nach Colby (%) |
|---|---|---|---|---|---|
| 13 | - (Kontrolle) | - | | 0 (77% Befall) | |
| 14 | Ethaboxam I | 1 | | 61 | |
| 15 | Maneb II-5 | 1 | | 0 | |
| 16 | I + II-5 | 1 + 1 | 1:1 | 81 | 61 |

Anwendungsbeispiel 3 - Aktivität gegen die Krautfäule an Tomaten verursacht durch *Phytophthora infestans* bei protektiver Behandlung

Blätter von getopften Tomatenpflanzen wurden in der unten angegebenen Wirkstoffkonzentration bis zur Tropfnässe besprüht. Zum Antrocknen des Wirkstoffbeiages wurden die Pflanzen für 3 Tage bei ca. 20°C im Gewächshaus

aufgestellt und dann wurden die Blätter mit einer wäßrigen Sporangienaufschwemmung von *Phytophthora infestans* inokuliert. Anschließend wurden die Pflanzen in einer wasserdampf-gesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, daß der Befall visuell in % ermittelt werden konnte

| Nr. | Wirkstoff | Konz. [ppm] | Verhältnis | Beobachtete Wirkung (%) | Berechnete Wirkung nach Colby (%) |
|---|---|---|---|---|---|
| 17 | - (Kontrolle) | - | | 0 (90% Befall) | |
| 18 | Ethaboxam I | 16 | | 33 | |
| 19 | Dimethomorph II-2 | 16<br>4 | | 22<br>0 | |
| 20 | I + II-2 | 16 + 4 | 4:1 | 56 | 33 |
| 21 | I + II-2 | 16 + 16 | 1:1 | 67 | 48 |

II. Mikrotitter-Tests

Für die folgenden Anwendungsbeispiele wurden die Wirkstoffe getrennt als Stammlösung formuliert mit einer Konzentration von 10000 ppm in DMSO.

Die Wirkstoffe Epoxiconazol, Famoxadon, Fluazinam und Zoxamid wurden als handelsübliche Formulierungen verwendet und mit Wasser als Stammlösung von 10.000 ppm vorverdünnt.

Die Stammlösungen wurden dem jeweiligen Verhältnis entsprechend gemischt, in eine Mikrotitterplatte (MTP) pipettiert und mit einem wäßrigen Pilznährmedium auf Malzbasis auf die angegebene Wirkstoffkonzentration verdünnt. Anschließend erfolgte die Zugabe einer wäßrigen Sporensuspension des betreffenden Pathogens. Die Platten wurden in einer wasserdampfgesättigten Kammer bei Temperaturen von 18°C aufgestellt. Mit einem Absorbtionsphotometer wurden die MTPs am 7. Tag nach der Inokulation bei 405nm vermessen.

Die gemessenen Parameter wurden mit dem Wachstum der Wirkstofffreien Kontrollvariante und dem pilz- und wirkstofffreien Leerwert verrechnet, um das relative Wachstum in % der Pathogene in den einzelnen Wirkstoffen zu ermitteln.

Anwendungsbeispiel 4 - Aktivität gegen den Verursacher der Grauschimmel *Botrytis cinerea* im Mikrotitter-Test

| Nr. | Wirkstoff | Konz. [ppm] | Verhältnis | Beobachtete Wirkung (%) | Berechnete Wirkung nach Colby (%) |
|---|---|---|---|---|---|
| 22 | Ethaboxam I | 63<br>32<br>4<br>2<br>1 | | 11<br>0<br>0<br>0<br>0 | |
| 23 | Dimethomorph II-2 | 63 | | 9 | |
| 24 | Pyraclostrobin II-6 | 0,5 | | 22 | |
| 25 | Zoxamid II-7 | 32 | | 23 | |
| 26 | Flumorph II-8 | 63 | | 16 | |
| 27 | Mancozeb II-9 | 4 | | 30 | |
| 28 | Folpet II-10 | 1 | | 38 | |
| 29 | I + II-2 | 63 + 63 | 1:1 | 60 | 19 |
| 30 | I + II-6 | 2 + 0,5 | 4:1 | 48 | 22 |
| 31 | I + II-7 | 32 + 32 | 1:1 | 56 | 23 |
| 32 | I + II-8 | 63 + 63 | 1:1 | 47 | 25 |

(fortgesetzt)

| Nr. | Wirkstoff | Konz. [ppm] | Verhältnis | Beobachtete Wirkung (%) | Berechnete Wirkung nach Colby (%) |
|---|---|---|---|---|---|
| 33 | I + II-9 | 4 + 4 | 1:1 | 79 | 30 |
| 34 | I + II-10 | 1 + 1 | 1:1 | 65 | 38 |

Anwendungsbeispiel 5 - Aktivität gegen den Verursacher des Reisbrandes *Pyricularia oryzae* im Mikrotitter-Test

| Nr. | Wirkstoff | Konz. [ppm] | Verhältnis | Beobachtete Wirkung (%) | Berechnete Wirkung nach Colby (%) |
|---|---|---|---|---|---|
| 35 | Ethaboxam I | 63<br>16<br>8<br>0,25<br>0,125 | | 56<br>41<br>18<br>0<br>0 | |
| 36 | Dimethomorph II-2 | 4 | | 6 | |
| 37 | Flumorph II-8 | 16 | | 11 | |
| 38 | Folpet II-10 | 1 | | 20 | |
| 39 | Famoxadon II-11 | 0,5 | | 64 | |
| 40 | Fosethyl-Al II-12 | 63 | | 8 | |
| 41 | Zoxamid II-13 | 8 | | 10 | |
| 42 | I + II-2 | 16 + 4 | 4:1 | 60 | 44 |
| 43 | I + II-8 | 16 + 16 | 1:1 | 67 | 47 |
| 44 | I + II-10 | 0,25 + 1 | 1:4 | 44 | 20 |
| 45 | I + II-11 | 0,125 + 0,5 | 1:4 | 76 | 64 |
| 46 | I + II-12 | 63 + 63 | 1:1 | 78 | 59 |
| 47 | I + II-13 | 8 + 8 | 1:1 | 90 | 26 |

Anwendungsbeispiel 6 - Aktivität gegen den Verursacher des Septoria Blattdürre *Septoria tritici* im Mikrotitter-Test

| Nr. | Wirkstoff | Konz. [ppm] | Verhältnis | Beobachtete Wirkung (%) | Berechnete Wirkung nach Colby (%) |
|---|---|---|---|---|---|
| 48 | Ethaboxam I | 16<br>4<br>0,125 | | 0<br>0<br>0 | |
| 49 | Mancozeb II-9 | 1 | | 29 | |
| 50 | Folpet II-10 | 4 | | 54 | |
| 51 | Metiram 11-14 | 4 | | 19 | |
| 52 | Dithianon II-15 | 0,125 | | 35 | |

(fortgesetzt)

| Nr. | Wirkstoff | Konz. [ppm] | Verhältnis | Beobachtete Wirkung (%) | Berechnete Wirkung nach Colby (%) |
|---|---|---|---|---|---|
| 53 | I + II-9 | 4 + 1 | 4:1 | 54 | 29 |
| 54 | I + II-10 | 16 + 4 | 4:1 | 100 | 54 |
| 55 | I + II-14 | 16+4 | 4:1 | 91 | 19 |
| 56 | I + II-15 | 0,125 + 0,125 | 1:1 | 60 | 35 |

Aus den Ergebnissen der Versuche geht hervor, dass die erfindungsgemäßen Mischungen aufgrund des starken Synergismus erheblich besser wirksam sind, als nach der Colby-Formel vorausberechnet.

**Patentansprüche**

**1.** Verfahren zur Verstärkung der fungiziden Wirksamkeit von

a) Ethaboxam der Formel I,

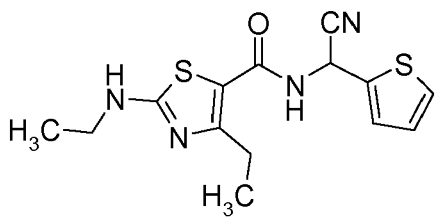

I

**dadurch gekennzeichnet, dass** der Wirkstoff I gleichzeitig getrennt oder gemeinsam mit mindestens einem Wirkstoff II aus der Gruppe:
b) Strobilurinderivate ausgewählt aus Kresoxim-Methyl oder Pyraclostrobin, in synergistisch wirksamen Mengen, durch Besprühen oder Bestäuben der Samen, der Pflanzen oder der Böden vor oder nach der Aussaat der Pflanzen oder vor oder nach dem Auflaufen der Pflanzen appliziert wird, wobei keine Polyoxyalkylenalkylether als Adjuvants zur Anwendung kommen.

**2.** Verwendung von Ethaboxam gemäß Anspruch 1 zur Verstärkung der fungiziden Wirksamkeit von mindestens einem Wirkstoff II gemäß Anspruch 1 in synergistisch wirksamen Mengen, wobei keine Polyoxyalkylenalkylether als Adjuvants zur Anwendung kommen.

**3.** Fungizide Mischungen enthaltend als aktive Komponenten

a) Ethaboxam gemäß Anspruch 1, und
b) als Wirkstoff II eine Verbindung aus der Gruppe Kresoxim-Methyl oder Pyraclostrobin
in synergistisch wirksamen Mengen.

**4.** Fungizide Mischungen gemäß Anspruch 3, enthaltend die Wirkstoffe I und II in einem Gewichtsverhältnis von 100:1 bis 1:100.

**5.** Ternäre fungizide Mischungen, enthaltend als aktive Komponenten

a) Ethaboxam gemäß Anspruch 1,
b) einen Wirkstoff II der Gruppe b) gemäß Anspruch 1, und
c) einen weiteren Wirkstoff III
Dithiocarbamate ausgewählt aus Maneb, Mancozeb, Metam oder Metiram, Sulfensäurederivate ausgewählt aus Captan oder Folpet, Zimtsäureamide und Analoge ausgewählt aus Dimethomorph oder Flumorph, oder Dithianon, Famoxadone, Cymoxanil, Fluazinam, Zoxamide oder Chlorothalonil

oder phosphorige Säure $H_3PO_3$, ihre Alkali- oder Erdalkalisalze oder sie freisetzende Derivate, oder Kupferfungizide;

in synergistisch wirksamen Mengen.

**6.** Ternäre fungizide Mischungen gemäß Anspruch 5, enthaltend als Wirkstoff II Pyraclostrobin.

**7.** Ternäre fungizide Mischungen gemäß Anspruch 5 oder 6, enthaltend als Wirkstoff III Dimethomorph oder Fluazinam.

**8.** Ternäre fungizide Mischungen gemäß Anspruch 5 oder 6, enthaltend als Wirkstoff III phosphorige Säure, Fosethyl-Al oder ein Kupferfungizid.

**9.** Ternäre fungizide Mischungen gemäß einem der Ansprüche 5 bis 8, enthaltend die Wirkstoffe I:II:III in Gewichtsverhältnissen von 100:1:2000 bis 100:1:5 bis 1:100:0,05 bis 1:100:20.

**10.** Fungizides Mittel, enthaltend einen flüssigen oder festen Trägerstoff und eine Mischung gemäß einem der Ansprüche 3 bis 9.

**11.** Verfahren zur Bekämpfung von Schadpilzen, **dadurch gekennzeichnet, dass** man die Pilze, deren Lebensraum oder die vor Pilzbefall zu schützenden Pflanzen, den Boden oder Saatgüter mit einer wirksamen Menge einer Mischung gemäß einem der Ansprüche 3 bis 9 oder einem Mittel gemäß Anspruch 10 behandelt.

**12.** Verfahren nach Anspruch 11, **dadurch gekennzeichnet, dass** man Ethaboxam und den Wirkstoff II gemäß Anspruch 3 gleichzeitig, und zwar gemeinsam oder getrennt, oder nacheinander ausbringt.

**13.** Saatgut, enthaltend die Mischungen gemäß einem der Ansprüche 3 bis 9 in einer Menge von 1 bis 1000 g/100 kg.

**14.** Verwendung von Ethaboxam und einem Wirkstoff III) gemäß Anspruch 5 zur Herstellung eines Mittels gemäß Anspruch 10.

**15.** Verfahren zur Herstellung eines Mittels gemäß Anspruch 10 durch Verstrecken von Ethaboxam und mindestens einem Wirkstoff II aus der Gruppe b) gemäß Anspruch 3.

Europäisches Patentamt
European Patent Office
Office européen des brevets

# EUROPÄISCHER RECHERCHENBERICHT

Nummer der Anmeldung
EP 10 17 1023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2004/052102 A (DOW AGROSCIENCES LLC) 24. Juni 2004 (2004-06-24) * Ansprüche 1,3; Tabellen 14,41,42,45,46 * ----- | 1 | INV. A01N43/78 A01P3/00 A01N37/50 A01N47/24 |
| A | GULYA, T. J.: "Efficacy of single and two-way fungicide seed treatments for the control of metalaxyl-resistant strains of Plasmopara halstedii (sunflower downy mildew)" BCPC CONFERENCE--PESTS & DISEASES, Bd. 2, 2002, Seiten 575-580, XP009061404 * Tabelle 2 * ----- | 1 | |

RECHERCHIERTE SACHGEBIETE (IPC)
A01N

Der vorliegende Recherchenbericht wurde für alle Patentansprüche erstellt

1

| Recherchenort | Abschlußdatum der Recherche | Prüfer |
|---|---|---|
| München | 17. September 2010 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 17 1023

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2010

| Im Recherchenbericht angeführtes Patentdokument | Datum der Veröffentlichung | Mitglied(er) der Patentfamilie | Datum der Veröffentlichung |
|---|---|---|---|
| WO 2004052102 A | 24-06-2004 | AT 397861 T | 15-07-2008 |
| | | AU 2003296366 A1 | 30-06-2004 |
| | | CN 1731930 A | 08-02-2006 |
| | | EP 1569518 A1 | 07-09-2005 |
| | | ES 2304549 T3 | 16-10-2008 |
| | | JP 2006525954 T | 16-11-2006 |
| | | KR 20050085325 A | 29-08-2005 |
| | | MX PA05005982 A | 19-08-2005 |
| | | NZ 540111 A | 30-04-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 639574 A
- US 3379610 A
- US 2504404 A
- US 2791605 A
- US 3248400 A
- EP 253213 A
- WO 9601256 A
- WO 9601559 A
- EP 120321 A
- EP 860438 A
- GB 857383 A
- US 3290353 A
- WO 9907674 A
- WO 9846607 A
- WO 0184930 A


### In der Beschreibung aufgeführte Nicht-Patentliteratur


- The Pecticide Manual. The British Crop Protection Council, 1995, 474
- **Colby, S. R.** Calculating synergistic and antagonistic responses of herbicide Combinations. *Weeds,* 1967, vol. 15, 20-22